# EUROPÄISCHE PATENTSCHRIFT

(11) **EP 0 569 349 B1**
(45) Veröffentlichungstag und Bekanntmachung des Hinweises auf die Patenterteilung: **05.03.1997**
(21) Anmeldenummer: 93890090.9
(22) Anmeldetag: 04.05.1993
(51) Int. Cl.: B32B 15/01

(54) **Bi-Metall-Bandrohling sowie daraus gefertigtes Bi-Metall-Sägeblatt**
Blank of bimetallic strip and hacksaw blade, made from it
Ebauche de bande bimétallique et lame de scies à métaux, formé de ce matériau

(30) Priorität: 06.05.1992 AT 920/92
(43) Veröffentlichungstag der Anmeldung: 10.11.1993
(73) Patentinhaber: BÖHLER YBBSTALWERKE Ges.m.b.H., A-3333 Böhlerwerk (AT)
(72) Erfinder: Döberl, Dieter, Dipl.-Ing., A-3333 Böhlerwerk (AT); Pacher, Oskar, Dr., A-8041 Graz (AT); Daxelmüller, Manfred, Dipl.-Ing., A-3340 Waidhofen (AT); Leban, Karl, Dipl.-Ing., A-2700 Wiener Neustadt (AT)
(74) Vertreter: Brauneiss, Leo, Dipl.Ing.

(56) Entgegenhaltungen:
- EP-A- 0 319 511
- EP-A- 0 452 526
- DE-A- 2 542 929
- DE-U- 9 211 283
- FR-A- 2 374 159

## Beschreibung

Die Erfindung betrifft einen Bi-Metall-Bandrohling sowie ein daraus gefertigtes Bi-Metall-Sägeblatt, insbesondere Bi-Metall-Bandsägeblatt, mit einem Schneidstahlteil, der in Längsrichtung auf einem Trägerteil bzw. Trägerband zumindest an einer Schmalseite aufgeschweißt ist, und der Schneidteil nach einer Bearbeitung zumindest die Zahnspitzen der Säge bildet. Bandrohlinge für Bi-Metall- Sägeblätter werden im wesentlichen durch ein stirnseitiges Zusammenschweißen eines Schneidteiles mit einem Trägerteil bzw. Trägerband gefertigt. Ein Schneidteil aus einer Schneidstahl- insbesondere Schnellstahllegierung, der als Band-oder Profildraht hergestellt ist, wird dabei zur Bildung des Rohlinges mit einem Trägermaterial bzw. Trägerband aus einer Legierung mit hoher Biegewechselfestigkeit mittels Elektronenstrahl-, Plasmastrahl,- Laserstrahl- oder dgl. Schweißung verbunden. Diese Komponentenausführung bzw. Bi-Metall-Ausführungsform des Bandrohlinges wird deshalb gewählt, weil Metallsägeblatter mit langer Lebensdauer einerseits Zähne mit hoher Schneidhaltigkeit und Schneidleistung haben sollen und andererseits der die Zähne aufweisende Sägekörper bzw. das Band im Betrieb wechselnd auf Biegung beansprucht ist, wobei eine hohe Sicherheit gegen Dauerbrüche gegeben sein muß. Das Verschweißen erfolgt ohne Zusatz- werkstoff, worauf der Verbundteil weichgeglüht und zu einem Rohband gewalzt wird, wonach gegebenenfalls nach einer zentrischen Längsteilung eines beiderseits mit Schneidteilen verbundenen Trägerbandes insbesondere unter materialabtragender Bearbeitung stirnseitig die Sägezähne aus dem Schneidteilberich ausgeformt werden.

Je nach Sägeart werden die Rohblätter mit verschieden breitem Schneidteil eingesetzt oder unterschiedliche Zahnformen gebildet, so daß entweder das gesamte Zahnprofil im Schneidteil zu liegen kommt, oder insbesondere nur die Zahnspitzen aus Schneidteilwerkstoff bestehen, weil die Zahnhöhe, das ist die Erstreckung zwischen Zahnspitze und Zahngrund, größer als die Schneidkomponentenbreite ist.

Zur Einstellung der geforderten Materialeigenschaften wird das erstellte Sägeband einer Wärmebehandlung mit einem Austenitisieren, Härten bzw. Abschrecken und einem mindestens einmal durchzuführenden Anlassen unterworfen.

Auf Grund der unterschiedlichen Legierungszusammensetzung ist jedoch ein unterschiedliches Gefügeumwandlungsverhalten der Trägerund Schneidwerkstoffe gegeben. Eine Wärmebehandlung muß daher immer mit Parametern erfolgen, welche möglichst in beiden Teilen das geforderte Eigenschaftsprofil annähernd erbringt. Für den die Zahnspitzenteile bildenden Werkstoff können dabei jedoch oft nicht die mit der Legierung erreichbaren Schneidhaltigkeitswerte bei der Spanabtragung erzielt werden, weil insbesondere eine auf die Härtung folgende Anlaßbehandlung auf eine hohe Biegewechselfestigkeit des Trägermaterials auszurichten ist. Eine etwa 0,3 Gew.-% Kohlenstoff, etwa 0,35 Gew.-% Vanadin sowie im wesentlichen weiters Chrom, Molybdän und/oder Wolfram, gegebenenfalls Aluminium und Nickel, zusätzlich Desoxidation-Schwefelbindungs-Begleitelemente aufweisende Trägerbandlegierung kann nach einer Wärmebehandlung bzw. nach einem Härten und Anlassen hoch biegewechselfest sein, das heißt, daß auch bei oftmaligem Biegen im elastischen Bereich des Materials keine Brüche oder Anrisse entstehen, wenn nach dem Harten das Anlassen bei hohen Temperaturen von zum Beispiel 560 bis 600 Grad C erfolgt. Zur Vermeidung von Grobkornbildung soll dabei die Härte- bzw.

Austenitisierungstemperatur nicht hoch gewählt werden, um eine feine Mikrostruktur im Gefüge des Werkstoffes des Trägerbandes einzustellen und dadurch eine Rißinitiation zu verhindern bzw. zu verzögern. Um bei als Schneidwerkstoff eingesetzten Schnellstählen hingegen hohe Härte und große Verschleißfestigkeit des Materials zu erreichen, sind zumindest kurzzeitig hohe Austenitisierungstemperaturen beim Härten anzuwenden, wonach beim Anlassen zur Härtesteigerung bzw. zur Ausbildung eines ausgeprägten sogenannten Sekundärhärtebuckels vorzugsweise oftmals ein Anwärmen auf niedrige Temperaturen von zum Beispiel 520 bis 560 Grad C durchzuführen ist.

Bei einer eingangs erwähnten Trägerbandlegierung kann also bei einer auf eine hohe Biegewechselfestigkeit ausgerichteten Wärmebehandlung des Bi-Metall-Sägerohlinges nicht gleichzeitig eine hohe Härte und Verschleißfestigkeit eines durch eine Schnellstahllegierung gebildeten Schneidteiles erreicht werden.
Die Erfindung setzt sich zum Ziel, eine Schneidstahllegierung und eine Trägerbandlegierung, welche miteinander gut verschweißbar sind, für einen Bi-Metall-Bandrohling zur Herstellung von Bi-Metall-Sägeblättern mit höchster Schneidhaltigkeit und Biegewechselfestigkeit anzugeben.
Dieses Ziel wird erfindungsgemäß dadurch erreicht, daß die Schneidstahllegierung die Elemente C, Al, Si, Mn, Cr, Mo, V, gegebenenfalls W, Co und Stahlbegleiter sowie die Bestandteile in Gew.-%
0,7 bis 2,3 Kohlenstoff
0,08 bis 2,0 Aluminium sowie
0,7 bis 6,5 Vanadin
und der mit dem Schneidstahl verschweißte Trägerteil bzw. das Trägerband aus einer Legierung bestehend aus C, Si, Mn, Cr. Mo, V , Al, gegebenenfalls W, Ni, Co, Ti, Nb und erschmelzungsbedingte Verunreinigungen, Rest Fe, gebildet ist, welche in Gew.-%
0,15 bis 0,50 Kohlenstoff
0,015 bis 0,18 Aluminium
0,10 bis 0,60 Vanadin
enthält.

Besonders gute Herstellbarkeit und Gebrauchseigenschaften der Säge werden erreicht, wenn der Trägerteil einen Al- Gehalt gebildet aus 0,035 bis 0,13, vorzugsweise 0,05 bis 0,09, insbesondere 0,06 bis 0,08, und einen Vanadingehalt gebildet aus 0,1 bis 0,5, vorzugsweise 0,2 bis 0,4 ,multipliziert mit den Al-bzw. V- Gehalten des Schneidstahlwerkstoffes aufweist.

Die Schneidhaltigkeit der Zahnspitzen bei verminderter verschleißender Abtragung und Auskolkung kann weiters gesteigert werden, wenn der Schneidteil aus einer Schnellstahllegierung mit einem Al- Gehalt in Gew.-% von 0,08 bis 2,0, vorzugsweise 0,2 bis 1,0, gebildet ist, welche Schnellstahllegierung gegenüber den Normwerten gemäß der jeweiligen DIN Werkstoffnummer einen um 0,05 bis 0,5, vorzugsweise um 0,1 bis 0,3, höheren Kohlenstoffgehalt und/oder einen um 0,04 bis 0,6 höheren Vanadingehalt aufweist. Höchste Biegewechselfestigkeit des Sägebandes wird erreicht, wenn der Trägerteil eine Zusammensetzung in Gew.-% von
0,03 bis 0,1 Aluminium sowie
0,25 bis 0,35 Kohlenstoff
0,15 bis 0,40 Vanadin
0,80 bis 4,50 Chrom
2,40 bis 2,80 Mo+W/2 mit Maximalgehalten an Si, Mn und Ni von jeweils 1,5, Rest im wesentlichen Eisen und unerwünschte Begleitelemente aufweist.

Vollkommen überraschend wurde gefunden, daß bei bestimmten, in Grenzen vorliegenen Konzentrationen von Kohlenstoff und Aluminium in Anwesenheit von Vanadin das Umwandlungsverhalten der Schneidstahllegierung derart geändert wird, daß beim Anlassen nach dem Härten höhere Temperaturen zur Ausbildung des Sekundärhärtemaximums des Werkstoffes anzuwenden sind. Somit können synergetisch eine für beide Werkstoffe eines Sägebandes günstige Wärmebehandlung vorgenommen und besonders gute Gesamtgebrauchseigenschaften erzielt werden.Bei einer Verwendung von Schnellarbeitssstahl als Schneidteilwerkstoff ist dabei trotz einer vom Fachmann auf Grund des hohen Aluminiumgehaltes befürchteten Graphitausscheidung eine Erhöhung der Kohlenstoffkonzentration über die üblichen bzw. genormten Werte möglich, wodurch bei feiner Mikrostruktur der Karbidanteil erhöht und die Schneidleistung der Säge verbessert werden.

Besondere Unempfindlichkeit des Trägerbandwerkstoffes gegen überhitzung bei bester Verschweißbarkeit mit dem Schneidteil und insbesondere eine Vermeidung einer durch Diffusion begründeten Bildung von spröden und/oder dauerrißauslösenden Phasen oder Bereichen in der Schweiß- bzw. Aufmischungszone wird durch ein Einstellen der Aluminium- und Vanadingehalte im Band- und Schneidteilwerkstoff mit einem bestimmten Verhältnis zueinander erreicht.

Im folgenden wird die Erfindung anhand von Beispielen näher erläutert.

Schneidstahlprofildrähte A bis A4 wurden mit Trägerbändern B bis B2 mittels ESS ( Elektronen-Strahl-Schweißen) verbunden und aus den dabei gebildeten 15 Bi-Metall-Bandrohlingen Bandsägen gefertigt, wobei eine im wesentlichen auf das Trägermaterial und auf die Sekundärhärte des Schneidstahles ausgerichtete Wärmebehandlung erfolgte.

Die Beispiele A, A2 und B2 gehören nicht zur Erfindung.

| | C | Si | Mn | Cr | Mo | Ni | V | W | Co | Al |
|---|---|---|---|---|---|---|---|---|---|---|
| A | 1,1 | 0,36 | 0,20 | 4,01 | 9,81 | 0,15 | 1,13 | 1,36 | 7,8 | 0,021 |
| A1 | 1,28 | 0,35 | 0,38 | 3,99 | 9,83 | | 1,28 | 1,34 | 7,6 | 0,99 |
| A2 | 0,88 | 0,38 | 0,29 | 4,12 | 4,98 | | 1,89 | 6,4 | | 0,023 |
| A3 | 1,1 | 0,43 | 0,34 | 4,08 | 5,10 | 0,12 | 2,01 | 6,39 | | 1,02 |
| A4 | 1,2 | 0,36 | 0,41 | 4,19 | 2,71 | | 2,59 | 2,86 | | 1,04 |
| B | 0,31 | 0,49 | 0,94 | 3,20 | 2,62 | 0,41 | 0,38 | | | 0,07 |
| B1 | 0,29 | 0,31 | 0,98 | 3,76 | 2,52 | 0,19 | 0,20 | | | 0,09 |
| B2 | 0,28 | 0,41 | 1,19 | 6,52 | | 0,21 | | 1,76 | | 0,012 |

Die Bandsägeblätter wurden im Labor mechanisch geprüft und praktischen Erprobungen bei einem Zersägen von Rundknüppeln aus geglühtem Warmarbeitsstahl ( DIN Werkstoff Nr. 1.2343) und Cr-Ni-Stahl ( DIN Werkstoff Nr. 1.4436) unterworfen.

Die Säge aus einem Trägerband B1 mit einem Schneidteil A1 erbrachte sowohl in den Labortests als auch bei der praktischen Erprobung die besten Werte und Gebrauchseigenschaften.

Trägerbänder B2 verursachten vielfach Ausfälle der Proben durch insbesondere Dauerbrüche, wobei B in wesentlich geringerem Ausmaß und B1 keine Rißbildungsneigung aufwiesen. Bei Anwendung von im wesentlichen auf hohe Biegewechselfestigkeit des Trägerwerkstoffes ausgerichteten Parametern bei der Wärmebehandlung des Sägebandes wurden mit den Schneidstahlegierungen A, A2 geringe Härtewerte und Abriebfestigkeit sowie gelegentlich Schweißnahtbrüche festgestellt. Bei den Legierungen A3 und A4 hingegen konnten gute Härtewerte und Leistungen erzielt werden. Beste Verschleißergebnisse auf Grund eines, wie gefunden wurde, hohen Karbidanteiles erbrachte der Schneidstahlwerkstoff A1.

## Patentansprüche

1. Bi-Metall-Bandrohling sowie daraus gefertigtes Bi-Metall-Sägeblatt, insbesondere Bi-Metall-Bandsägeblatt, mit einem Schneidstahlteil, der in Längsrichtung auf einem Trägerteil bzw. Trägerband zumindest an einer Schmalseite aufgeschweißt ist, und der Schneidteil nach einer Bearbeitung zumindest die Zahnspitzen der Säge bildet, wobei die Schneidstahllegierung die Elemente C, Al, Si, Mn, Cr, Mo, V, sowie gegebenenfalls W, Co,sowie als Rest Fe und Verunreinigungen enthält und wobei die Trägerbandlegierung die Elemente C, Si, Mn, Cr, Mo, V, Al sowie gegebenenfalls W, Ni, Co, Ti, Nb,sowie als Rest Fe Verunreinigungen enthält, dadurch gekennzeichnet, daß die Schneidstahllegierung in Gew.-%
0,7 bis 2,3 Kohlenstoff
0,08 bis 2,0 Aluminium sowie
0,7 bis 6,5 Vanadin
und der mit dem Schneidstahl verschweißte Trägerteil bzw. das Trägerband in Gew.-%
0,15 bis 0,50 Kohlenstoff
0,015 bis 0,18 Aluminium sowie
0,10 bis 0,6 Vanadin
enthält.

2. Bi-Metall-Band und Sägeblatt nach Anspruch 1, dadurch gekennzeichnet, daß der Trägerteil einen Al-Gehalt gebildet aus 0,035 bis 0,13, vorzugsweise 0,05 bis 0,09, insbesondere 0,06 bis 0,08, und einen Vanadingehalt gebildet aus 0,1 bis 0,5, vorzugsweise 0,2 bis 0,4, multipliziert mit den Al- bzw. V-Gehalten des Schneidstahlwerkstoffes aufweist.

3. Bi-Metall-Band und Sägeblatt nach einem der Ansprüche 1 oder 2, dadurch gekennzeichnet, daß der Schneidteil aus einer Schnellstahllegierung mit einem Al-Gehalt in Gew.-% von 0,08 bis 2,0, vorzugsweise 0,2 bis 1,0, gebildet ist, welche Schnellstahllegierung gegenüber den Normwerten gemäß der jeweiligen DIN Werkstoffnummer einen um 0,05 bis 0,5 , vorzugsweise um 0,1 bis 0,3 höheren Kohlenstoffgehalt und/oder einen um 0,04 bis 0,6 höheren Vanadingehalt aufweist.

4. Bi-Metall-Band und Sägeblatt nach einem der Ansprüche 1 bis 3, dadurch gekennzeichnet, daß der Trägerteil eine Zusammensetzung in Gew.-% von
0,03 bis 0,1 Aluminium sowie
0,25 bis 0,35 Kohlenstoff
0,15 bis 0,40 Vanadin
0,80 bis 4,50 Chrom
2,40 bis 2,80 Mo + W/2 mit Maximalgehalten an Si, Mn und Ni von jeweils 1,5, Rest im wesentlichen Eisen und unerwünschte Begleitelemente aufweist.

## Claims

1. A blank of bimetallic strip and a bimetallic saw blade produced therefrom, in particular a bimetallic band-saw blade, with a cutting-steel portion which is welded in the longitudinal direction to a carrier portion or carrier strip at least on a narrow side, and the cutting portion forms at least the tips of the teeth of the saw after treatment, wherein the cutting-steel alloy contains the elements C, Al, Si, Mn, Cr, Mo, V, as well as optionally W, Co, and Fe and impurities as the remainder, and wherein the carrier-strip contains the elements C, Si, Mn, Cr, Mo, V, Al as well as optionally W, Ni, Co, Ti, Nb, and Fe [and] impurities as the remainder, **characterized in that** the cutting-steel alloy contains in percent by weight
0·7 to 2·3 carbon
0·08 to 2·0 aluminium, and
0·7 to 6·5 vanadium,
and the carrier portion or carrier strip welded to the cutting steel contains in percent by weight
0·15 to 0·50 carbon
0·015 to 0·18 aluminium, and
0·1 to 0·6 vanadium.

2. A bimetallic strip and saw blade according to Claim 1, **characterized in that** the carrier portion comprises an Al content produced from 0·035 to 0·13, preferably 0·05 to 0·09, and in particular 0·06 to 0·08, and a vanadium content produced from 0·1 to 0·5, preferably 0·2 to 0·4, multiplied by the Al or V contents of the cutting-steel material.

3. A bimetallic strip and saw blade according to one of Claims 1 [and] 2, **characterized in that** the cutting portion is produced from a cutting-steel alloy with an Al content in percent by weight of 0·08 to 2·0, preferably 0·2 to 1·0, the cutting-steel alloy having a carbon content higher by 0·05 to 0·5, preferably by 0·1 to 0·3, and/or a vanadium content higher by 0·04 to 0·6, than the standard values in accordance with the respective *DIN* [German Industrial Standard] material number.

4. A bimetallic strip and saw blade according to one of Claims 1 to 3, **characterized in that** the carrier portion has a composition in percent by weight of
0·03 to 0·1 aluminium, and
0·25 to 0·35 carbon
0·15 to 0·40 vanadium
0·80 to 4·50 chromium
2·40 to 2·80 Mo + W/2
with maximum contents of Si, Mn and Ni of 1·5 in each case, the remainder essentially iron and undesired accompanying elements.

## Revendications

1. Ebauche de bande bimétallique ainsi que lame de scie bimétallique fabriquée à partie de celle-ci, en particulier lame de scie à bande bimétallique, comportant une partie d'acier de coupe, qui est soudée dans la direction longitudinale sur une partie de support ou une bande de support au moins sur un chant, la partie de coupe formant après un traitement au moins les pointes de dents de la scie, l'alliage d'acier de coupe contenant les éléments C, Al, Si, Mn, Cr, Mo, V ainsi qu'éventuellement W, Co, le restant étant constitué de Fe et d'impuretés, et l'alliage de la bande de support contenant les éléments C, Si, Mn, Cr, Mo, V, Al ainsi qu'éventuellement W, Ni, Co, Ti, Nb et le restant étant constitué de fer et d'impuretés, caractérisées en ce que l'alliage d'acier de coupe contient :
0,7 à 2,3 % en poids de carbone,
0,08 à 2,0 % en poids d'aluminium, ainsi que
0,7 à 6,5 % en poids de vanadium
et la partie de support ou la bande de support soudée à l'acier de coupe contient :
0,15 à 0,50 % en poids de carbone,
0,015 à 0,18 % en poids d'aluminium, ainsi que
0,10 à 0,60 % en poids de vanadium.

2. Bande bimétallique et lame de scie selon la revendication 1, caractérisées en ce que la partie de support présente une teneur en Al de 0,035 à 0,13, de préférence de 0,05 à 0,09, en particulier de 0,06 à 0,08 et une teneur en vanadium de 0,1 à 0,5, de préférence de 0,2 à 0,4, multipliées par les teneurs en Al ou en V du matériau d'acier de coupe.

3. Bande bimétallique et lame de scie selon l'une quelconque des revendications 1 ou 2, caractérisées en ce que la partie de coupe est formée d'un alliage d'acier-rapide ayant une teneur en Al en % en poids de 0,08 à 2,0, de préférence de 0,2 à 1,0, ledit alliage d'acier-rapide présentant, vis-à-vis des valeurs normalisées selon le numéro de matériau DIN respectif, une teneur en carbone plus élevée de 0,05 à 0,5, de préférence de 0,1 à 0,3 et/ou une teneur en vanadium plus élevée de 0,04 à 0,6.

4. Bande bimétallique et lame de scie selon l'une quelconque des revendications 1 à 3, caractérisées en ce que la partie de support présente une composition comme suit :
0,03 à 0,1 % en poids d'aluminium ainsi que
0,25 à 0,35 % en poids de carbone,
0,15 à 0,40 % en poids de vanadium,
0,80 à 4,50 % en poids de chrome,
2,40 à 2,80 % en poids de Mo+W/2 avec des teneurs maximales en Si, Mn et Ni respectivement de 1,5, le reste étant sensiblement constitué de fer et d'éléments d'accompagnement non souhaités.
